(19) Europäisches Patentamt
European Patent Office
Office européen des brevets

(11) **EP 4 474 169 A1**

(12) **EUROPEAN PATENT APPLICATION**

(43) Date of publication:
**11.12.2024 Bulletin 2024/50**

(21) Application number: **23305894.0**

(22) Date of filing: **05.06.2023**

(51) International Patent Classification (IPC):
***B60C 1/00*** *(2006.01)* ***C08K 3/34*** *(2006.01)*

(52) Cooperative Patent Classification (CPC):
(C-Sets available)
**B60C 1/0008; C08K 3/34** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **IMERTECH SAS**
**75015 Paris (FR)**

(72) Inventor: **MELI, Gilles**
**Le Fagua, 31410 (FR)**

(74) Representative: **Haseltine Lake Kempner LLP**
**One Portwall Square**
**Portwall Lane**
**Bristol BS1 6BH (GB)**

(54) **POLYMER COMPOSITIONS AND INNER LINERS FOR TYRES**

(57)     An inner liner for a tyre, or a polymer composition comprising halogenated butyl rubber, comprising a microcrystalline talc particulate having a BET specific surface area no less than about 35 $m^2$/g and at least one of: (a) a $d_{50}$, by Sedigraph, no greater than about 2.0 $\mu$m; (b) a $d_{50}$, by laser, no greater than about 5.0 $\mu$m; and (c) an aspect ratio from about 50 to about 100.

EP 4 474 169 A1

**(Cont. next page)**

(52) Cooperative Patent Classification (CPC): (Cont.)

C-Sets
**C08K 3/34, C08L 23/283**

**Description**

**TECHNICAL FIELD**

The present disclosure concerns inner liners formed from polymer compositions comprising talc particulates, tyres comprising such inner liners, polymer compositions comprising talc particulates, and associated methods and uses.

**BACKGROUND**

Polymer compositions are commonly reinforced with filler materials. Elastomeric polymer compositions (such as rubbers), in particular, are commonly reinforced with filler materials such as precipitated silica or carbon black. Such filler materials are used to improve properties such as the tensile strength, elongation at break and tear resistance of the polymer composition.

Inner liners of tyres are typically manufactured using elastomers such as halogenated butyl rubber. These materials should combine excellent mechanical properties (such as high tensile strength and tear resistance) with low oxygen permeability. Existing inner liner polymer compositions are typically reinforced using carbon black, either alone or in combination with high aspect ratio talc particulates and optionally silica.

However, there are downsides associated with the use of these filler materials. For example, carbon black, which is produced by the incomplete combustion of coal and coal tar, vegetable matter or petroleum products, is not an environmentally friendly or easily recyclable material. The use of high aspect ratio talc can also degrade mechanical properties (such as tensile strength) of some polymers. While mechanical properties can be improved by including silica in addition to talc, silica cannot be incorporated in large quantities due to a tendency to aggregate, leading to problems with dispersion and agglomeration and a reduction in the rate of vulcanization.

**SUMMARY**

According to a first aspect, there is provided an inner liner for a tyre, the inner liner formed from a polymer composition comprising a (e.g. microcrystalline) talc particulate having a BET specific surface area no less than about 35 $m^2/g$ and at least one of: (a) a $d_{50}$, by Sedigraph, no greater than about 2.0 $\mu$m; (b) a $d_{50}$, by laser, no greater than about 5.0 $\mu$m; and (c) an aspect ratio from about 50 to about 100.

According to a second aspect, there is provided a tyre comprising the inner liner according to the first aspect.

According to a third aspect, there is provided a polymer composition comprising a halogenated butyl rubber and a (e.g. microcrystalline) talc particulate having a BET specific surface area no less than about 35 $m^2/g$ and one or both of: (a) a $d_{50}$, by Sedigraph, no greater than about 2.0 $\mu$m; and (b) a $d_{50}$, by laser, no greater than about 5.0 $\mu$m.

According to a fourth aspect, there is provided a method of making the inner liner for a tyre according to the first aspect, the method comprising: (a) preparing a polymer composition, wherein preparing the polymer composition comprises combining an elastomer such as a synthetic rubber or a natural rubber, for example, a halogenated butyl rubber such as bromobutyl rubber and/or chlorobutyl rubber, or precursors therefor, with the (e.g. microcrystalline) talc particulate; and (b) forming the inner liner from the polymer composition.

According to a fifth aspect, there is provided a use, in a polymer composition, of a (e.g. microcrystalline) talc particulate having a BET specific surface area no less than about 35 $m^2/g$ and one or both of a $d_{50}$, by Sedigraph, no greater than about 2.0 $\mu$m and a $d_{50}$, by laser, no greater than about 5.0 $\mu$m to reduce the oxygen permeability of the polymer composition, for example, as compared to an equivalent polymer composition lacking a talc particulate reinforcing filler.

According to a sixth aspect, there is provided a method of reducing the oxygen permeability of a polymer composition, the method comprising adding a (e.g. microcrystalline) talc particulate having a BET specific surface area no less than about 35 $m^2/g$ and one or both of a $d_{50}$, by Sedigraph, no greater than about 2.0 $\mu$m and a $d_{50}$, by laser, no greater than about 5.0 $\mu$m to the polymer composition.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

**DETAILED DESCRIPTION OF THE INVENTION**

It has surprisingly been found that a talc particulate combining a relatively high BET specific surface area with a relatively low particle size (a) is particularly effective at reinforcing polymer compositions (such as those containing halogenated butyl rubber) used to manufacture inner liners of tyres and (b) is effective in reducing $O_2$ permeability of

such polymer compositions.

*Talc particulate*

The talc particulate may be any talc particulate described in International Patent Application Number PCT/EP2022/060065, published as WO 2022/219138 A1, with title "TALC PARTICULATES", which is hereby incorporated by reference in its entirety. For example, the talc particulate may have any of the properties described on pages 4 to 21 of WO 2022/219138 A1, which are hereby incorporated by reference.

As used herein, the term "talc" means either the magnesium silicate mineral, or the mineral chlorite (magnesium aluminium silicate), or a mixture of the two, optionally associated with other minerals, for example, dolomite, calcite and/or magnesite, or furthermore, synthetic talc.

In certain embodiments, the talc is the magnesium silicate mineral or the mineral chlorite, or a mixture thereof. Optionally, the talc may further include dolomite, calcite or magnesite, or combinations thereof. The total amount of other minerals such as dolomite, calcite and/or magnesite in the talc may be less than about 25 % by weight, based on the total weight of talc, for example, less than about 20 % by weight, or less than about 15 % by weight, or less than about 10 % by weight, or less than about 5 % by weight, or less than about 1 % by weight, or less than about 0.75 % by weight, or 0.5 % by weight or less, based on the total weight of talc. In certain embodiments, the talc comprises, consists essentially of, or consists of magnesium silicate mineral. In certain embodiments, the talc is a mixture of magnesium silicate mineral and/or chlorite. The chlorite may, for example, comprise, consist essentially of, or consist of clinochlore $((Mg,Fe^{2+})_5Al(Si_3Al)O_{10}(OH)_8$. For example, the chlorite may comprise primarily clinochlore. The weight ratio of magnesium silicate mineral to chlorite may be from about 5:1 to about 1:4, for example, from about 4:1 to about 1:1, or from about 4:1 to about 2:1, or from about 4:1 to about 2.5:1, or from about 4:1 to about 3:1, or about 2:1, or about 3:1, or about 4:1. In certain embodiments, the talc comprises, consists essentially of, or consists of synthetic talc or talcose.

In certain embodiments, the talc is a hydroxylated magnesium silicate, which belongs to the family of layered phyllosilicates. Its elemental structure consists of $MgO_4(OH)$ octahedral layers (named "O") sandwiched between 6 ring silica tetrahedron $SiO_2$ (named "T"). This forms a repeating base unit made of TOT layers. These TOT layers will then pile up along c* axis to form a crystallite with a coherent crystalline structure whose size can be measured.

BET specific surface area refers to the area of the surface of the particles of the talc particulate with respect to unit mass, determined according to the BET method by the quantity of nitrogen adsorbed on the surface of said particles so as to form a monomolecular layer completely covering said surface (measurement according to the BET method, AFNOR standard X11-621 and 622 or ISO 9277). Details of the BET specific surface area measurement method used in the preparation of the present application are set out in the Examples.

Particle size properties may be measured in a well-known manner by sedimentation of the particulate filler or material in a fully dispersed condition in an aqueous medium using a Sedigraph 5100 machine as supplied by Micromeritics Instruments Corporation, Norcross, Georgia, USA (web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (e.s.d), less than given e.s.d values. The mean particle size $d_{50}$ is the value determined in this way of the particle e.s.d at which there are 50% by weight of the particles which have an equivalent spherical diameter less than that $d_{50}$ value. The $d_{98}$, $d_{90}$, $d_{75}$, $d_{25}$ and the $d_{10}$ are the values determined in this way of the particle e.s.d. at which there are 98%, 90%, 75%, 25% and 10% respectively by weight of the particles which have an equivalent spherical diameter less than that $d_{98}$, $d_{90}$, $d_{75}$, $d_{25}$ or $d_{10}$ value.

Particle size properties may also be measured by wet Malvern laser scattering (standard ISO 13320-1). In this technique, the size of particles in powders, suspensions and emulsions may be measured using the diffraction of a laser beam, based on the application of Mie theory. Such a machine, for example a Malvern Mastersizer 2000 (as supplied by Malvern instruments), provides measurements and a plot of the cumulative percentage by volume of particles having a size, referred to in the art as the "equivalent spherical diameter" (e.s.d), less than given e.s.d values. The mean particle size $d_{50}$ is the value determined in this way of the particle e.s.d. at which there are 50% by volume of the particles which have an equivalent spherical diameter less than that $d_{50}$ value. The $d_{98}$, $d_{90}$, $d_{75}$, $d_{25}$ and the $d_{10}$ are the values determined in this way of the particle e.s.d. at which there are 98%, 90%, 75%, 25% and 10% respectively by volume of the particles which have an equivalent spherical diameter less than that $d_{98}$, $d_{90}$, $d_{75}$, $d_{25}$ or $d_{10}$ value. For the avoidance of doubt, the measurement of particle size using laser light scattering is not an equivalent method to the sedimentation method referred to above.

Details of the Sedigraph and laser particle size measurement methods used in the preparation of the present application are set out in the Examples of International Patent Application No. PCT/EP2022/060065, published as International Publication No. WO 2022/219138 A1, entitled "TALC PARTICULATES" and filed in the name of IMERTECH SAS on 14 April 2022, which are hereby incorporated by reference.

The talc particulate is preferably a microcrystalline talc (i.e. not macrocrystalline talc). The crystalline structure of talc (e.g. whether the talc is microcrystalline or macrocrystalline) may be characterized in terms of the number of TOT layers in the talc particles and the talc particle size and/or surface area.

The number of TOT layers of the talc particulate may be determined by X-Ray Diffraction (XRD) and applying the Scherrer equation on the (002) and (006) peaks of the pattern.

For example, XRD patterns may be acquired using a PAnalytical X'PRO X-Ray diffractometer using a CuKα radiation of a wavelength of λ = 1.5406 Å. The samples are obtained by filling an aluminium holder in order to obtain a quasi-random orientation. An example of acquisition parameters can be in the 2θ range = 8 - 80° with a step size of 0.01 ° and a step duration of 2 s. The Scherrer equation is then applied on the (002) and (006) peaks of the talc pattern which are located at approximately 2θ = 9.3 - 9.7° and 2θ = 28.3 - 28.9° on the XRD pattern. This formula uses the width of the peak at half height relative to the background line in order to calculate the coherent scattering domain of the talc crystallite according the c* axis. Then, the number of TOT layers in a single talc crystallite can be deduced. This method is implemented in a paper on synthetic talc (Dumas et al., Angewandte Chemie International Edition 2016, 55, 9868 -9871), the contents of which are incorporated herein by reference.

The Scherrer equation is expressed as follows:

$$L = \frac{\lambda \ x \ 0.91}{FWHM \ x \ cos\theta}$$

where:

L is the coherent scattering domain (CSD c*) (Å);
λ is the wavelength of the X-Ray beam (Å);
FWHM is the full width at half maximum of the considered diffraction peak (rad); and
θ is the position of the diffraction peak (rad).

From this coherent scattering domain, it is possible to deduce the number of TOT layers (N(TOT)) that are stacked in the coherent scattering domain:

$$N(TOT) = \frac{L}{d}$$

where:

L is the coherent scattering domain along c* axis (Å); and
d is the height of a talc elementary unit, i.e. the d(002) spacing.

d is calculated using the position of the (002) peak on the XRD pattern and the Bragg formula:

$$d = \frac{n\lambda}{2sin\theta}$$

where:
n is the diffraction order;

λ is the wavelength of the X-Ray beam (Å); and
θ is the position of the diffraction peak (rad).

A crystallinity index, CI, may be defined as the ratio of the number of TOT layers per coherent scattering domain, N(TOT), to the BET specific surface area, BET SSA, in $m^2/g$:

$$CI = \frac{N(TOT)}{BET \ SSA}$$

A microcrystalline talc is a talc having a value of CI no greater than about 7.5 $g/m^2$.

The talc particulate (e.g. microcrystalline talc particulate) may have a crystallinity index, CI, from about 0.01 $g/m^2$ to about 7.5 $g/m^2$, or from about 0.01 $g/m^2$ to about 7.0 $g/m^2$, or from about 0.01 $g/m^2$ to about 6.0 $g/m^2$, or from about 0.01 $g/m^2$ to about 5.0 $g/m^2$, or from about 0.01 $g/m^2$ to about 4.0 $g/m^2$, or from about 0.01 $g/m^2$ to about 3.0 $g/m^2$, or from about 0.01 $g/m^2$ to about 2.0 $g/m^2$, or from about 0.01 $g/m^2$ to about 1.5 $g/m^2$, or from about 0.1 $g/m^2$ to about 7.5 $g/m^2$, or from about 0.1 $g/m^2$ to about 6.0 $g/m^2$, or from about 0.1 $g/m^2$ to about 4.0 $g/m^2$, or from about 0.1 $g/m^2$ to about 2.0 $g/m^2$, or from about 0.5 $g/m^2$ to about 7.5 $g/m^2$, or from about 0.5 $g/m^2$ to about 6.0 $g/m^2$, or from about 0.5 $g/m^2$ to about 4.0 $g/m^2$, or from about 0.5 $g/m^2$ to about 2.0 $g/m^2$.

The talc particulate (e.g. microcrystalline talc particulate) may have a BET specific surface area of no less than about 35 $m^2/g$, for example,no less than about 40 $m^2/g$, or no less than about 45 $m^2/g$. The talc particulate (e.g. microcrystalline talc particulate) may have a BET specific surface area no greater than about 150 $m^2/g$. The talc particulate (e.g. microcrystalline talc particulate) may have a BET specific surface area from about 35 $m^2/g$ to about 150 $m^2/g$, for example, from about 35 $m^2/g$ to about 100 $m^2/g$, or from about 40 $m^2/g$ to about 100 $m^2/g$, or from about 40 $m^2/g$ to about 80 $m^2/g$, or from about 45 $m^2/g$ to about 80 $m^2/g$, or from about 40 $m^2/g$ to about 60 $m^2/g$.

The talc particulate (e.g. microcrystalline talc particulate) may have a $d_{50}$, by Sedigraph, no greater than about 2.0 $\mu$m, for example, no greater than about 1.0 $\mu$m. The talc particulate (e.g. microcrystalline talc particulate) may have a $d_{50}$, by Sedigraph, no less than about 0.1 $\mu$m. The talc particulate (e.g. microcrystalline talc particulate) may have a $d_{50}$, by Sedigraph, from about 0.1 $\mu$m to about 2.0 $\mu$m, for example, or from about 0.1 $\mu$m to about 1.0 $\mu$m, or from about 0.3 $\mu$m to about 2.0 $\mu$m, or from about 0.3 $\mu$m to about 1.0 $\mu$m

The talc particulate (e.g. microcrystalline talc particulate) may have a $d_{50}$, by laser, no greater than about 5.0 $\mu$m, for example, no greater than about 3.0 $\mu$m. The talc particulate (e.g. microcrystalline talc particulate) may have a $d_{50}$, by laser, no less than about 1.0 $\mu$m, for example, no less than about 2.0 $\mu$m. The talc particulate (e.g. microcrystalline talc particulate) may have a $d_{50}$, by laser, from about 1.0 $\mu$m to about 5.0 $\mu$m, for example, from about 1.0 $\mu$m to about 4.0 $\mu$m, or from about 1.0 $\mu$m to about 3.0 $\mu$m.

The talc particulate (e.g. microcrystalline talc particulate) may have a $d_{95}$, by laser, no greater than about 10.0 $\mu$m. The talc particulate (e.g. microcrystalline talc particulate) may have a $d_{95}$, by laser, no less than about 3.0 $\mu$m. The talc particulate (e.g. microcrystalline talc particulate) may have a $d_{95}$, by laser, from about 3.0 $\mu$m to about 10.0 $\mu$m, for example, from about 4.0 $\mu$m to about 10.0 $\mu$m, , or from about 5.0 $\mu$m to about 7.0 $\mu$m.

The talc particulate (e.g. microcrystalline talc particulate) may have a $d_{75}$, by laser, no greater than about 7.0 $\mu$m. The talc particulate (e.g. microcrystalline talc particulate) may have a $d_{75}$, by laser, no less than about 2.0 $\mu$m. The talc particulate (e.g. microcrystalline talc particulate) may have a $d_{75}$, by laser, from about 2.0 $\mu$m to about 7.0 $\mu$m, for example, from about 2.0 $\mu$m to about 5.0 $\mu$mor from about 3.0 $\mu$m to about 4.0 $\mu$m.

The talc particulate (e.g. microcrystalline talc particulate) may have a $d_{25}$, by laser, no greater than about 3.0 $\mu$m. The talc particulate (e.g. microcrystalline talc particulate) may have a $d_{25}$, by laser, no less than about 0.5 $\mu$m. The talc particulate (e.g. microcrystalline talc particulate) may have a $d_{25}$, by laser, from about 0.5 $\mu$m to about 3.0 $\mu$m, for example, from about 1.0 $\mu$m to about 3.0 $\mu$m, or from about 1.0 $\mu$m to about 2.0 $\mu$m, or from about 1.5 $\mu$m to about 2.0 $\mu$m.

The talc particulate (e.g. microcrystalline talc particulate) may have a $d_{95}$, by Sedigraph, no greater than about 5.0 $\mu$m. The talc particulate (e.g. microcrystalline talc particulate) may have a $d_{95}$, by Sedigraph, no less than about 0.5 $\mu$m. The talc particulate (e.g. microcrystalline talc particulate) may have a $d_{95}$, by Sedigraph, from about 0.5 $\mu$m to about 5.0 $\mu$m, for example, from about 0.5 $\mu$m to about 3.0 $\mu$m, or from about 0.5 $\mu$m to about 2.0 $\mu$m, or from about 1.0 $\mu$m to about 2.0 $\mu$m.

The talc particulate (e.g. microcrystalline talc particulate) may have a $d_{75}$, by Sedigraph, no greater than about 3.0 $\mu$m. The talc particulate (e.g. microcrystalline talc particulate) may have a $d_{75}$, by Sedigraph, no less than about 0.1 $\mu$m. The talc particulate (e.g. microcrystalline talc particulate) may have a $d_{75}$, by Sedigraph, from about 0.1 $\mu$m to about 3.0 $\mu$m, for example, from about 0.5 $\mu$m to about 2.0 $\mu$m, or from about 0.5 $\mu$m to about 1.0 $\mu$m.

The talc particulate (e.g. microcrystalline talc particulate) may have a $d_{25}$, by Sedigraph, no greater than about 1.0 $\mu$m. The talc particulate (e.g. microcrystalline talc particulate) may have a $d_{25}$, by Sedigraph, no less than about 0.1,. The talc particulate (e.g. microcrystalline talc particulate) may have a $d_{25}$, by Sedigraph, from about 0.1 $\mu$m to about 1.0 $\mu$m, for example, from about 0.1 $\mu$m to about 0.5 $\mu$m.

The talc particulate (e.g. microcrystalline talc particulate) may have a BET specific surface area no less than about 35 $m^2/g$ and one or both of: (a) a $d_{50}$, by Sedigraph, no greater than about 2.0 $\mu$m; and (b) a dso, by laser, no greater than about 5.0 $\mu$m.

The talc particulate (e.g. microcrystalline talc particulate) may have a BET specific surface area no less than about 35 $m^2/g$ and one or more of: (a) a $d_{50}$, by Sedigraph, no greater than about 2.0 $\mu$m; (b) a dso, by laser, no greater than about 5.0 $\mu$m; and (c) a CI no greater than about 7.5 $g/m^2$, for example, from about 0.01 $g/m^2$ to about 7.5 $g/m^2$, or from about 0.01 $g/m^2$ to about 4.0 $g/m^2$.

The talc particulate (e.g. microcrystalline talc particulate) may have a BET specific surface area no less than about 35 $m^2/g$ and one or both of: (a) a $d_{50}$, by Sedigraph, no greater than about 1.5 $\mu$m, for example, no greater than about 1.0 $\mu$m, or from about 0.1 $\mu$m to about 2.0 $\mu$m, for example, from about 0.1 $\mu$m to about 1.5 $\mu$m, or from about

$0.1\ \mu m$ to about $1.0\ \mu m$; and (b) a $d_{50}$, by laser, no greater than about $4.0\ \mu m$, for example, no greater than about $3.0\ \mu m$, or from about $1.0\ \mu m$ to about $5.0\ \mu m$, for example, from about $1.0\ \mu m$ to about $4.0\ \mu m$, or from about $1.0\ \mu m$ to about $3.0\ \mu m$.

The talc particulate (e.g. microcrystalline talc particulate) may have a BET specific surface area no less than about $35\ m^2/g$ and one or more of: (a) a $d_{50}$, by Sedigraph, no greater than about $1.5\ \mu m$, for example, no greater than about $1.0\ \mu m$, or from about $0.1\ \mu m$ to about $2.0\ \mu m$, for example, from about $0.1\ \mu m$ to about $1.5\ \mu m$, or from about $0.1\ \mu m$ to about $1.0\ \mu m$; (b) a $d_{50}$, by laser, no greater than about $4.0\ \mu m$, for example, no greater than about $3.0\ \mu m$, or from about $1.0\ \mu m$ to about $5.0\ \mu m$, for example, from about $1.0\ \mu m$ to about $4.0\ \mu m$, or from about $1.0\ \mu m$ to about $3.0\ \mu m$; and (c) a Cl no greater than about $7.5\ g/m^2$, for example, from about $0.01\ g/m^2$ to about $7.5\ g/m^2$, or from about $0.01\ g/m^2$ to about $4.0\ g/m^2$.

The talc particulate (e.g. microcrystalline talc particulate) may have a BET specific surface area no less than about $40\ m^2/g$ and one or both of: (a) a $d_{50}$, by Sedigraph, no greater than about $1.5\ \mu m$, for example, no greater than about $1.0\ \mu m$, or from about $0.1\ \mu m$ to about $2.0\ \mu m$, for example, from about $0.1\ \mu m$ to about $1.5\ \mu m$, or from about $0.1\ \mu m$ to about $1.0\ \mu m$; and (b) a $d_{50}$, by laser, no greater than about $4.0\ \mu m$, for example, no greater than about $3.0\ \mu m$, or from about $1.0\ \mu m$ to about $5.0\ \mu m$, for example, from about $1.0\ \mu m$ to about $4.0\ \mu m$, or from about $1.0\ \mu m$ to about $3.0\ \mu m$.

The talc particulate (e.g. microcrystalline talc particulate) may have a BET specific surface area no less than about $40\ m^2/g$ and one or more of: (a) a $d_{50}$, by Sedigraph, no greater than about $1.5\ \mu m$, for example, no greater than about $1.0\ \mu m$, or from about $0.1\ \mu m$ to about $2.0\ \mu m$, for example, from about $0.1\ \mu m$ to about $1.5\ \mu m$, or from about $0.1\ \mu m$ to about $1.0\ \mu m$; (b) a $d_{50}$, by laser, no greater than about $4.0\ \mu m$, for example, no greater than about $3.0\ \mu m$, or from about $1.0\ \mu m$ to about $5.0\ \mu m$, for example, from about $1.0\ \mu m$ to about $4.0\ \mu m$, or from about $1.0\ \mu m$ to about $3.0\ \mu m$; and (c) a Cl no greater than about $7.5\ g/m^2$, for example, from about $0.01\ g/m^2$ to about $7.5\ g/m^2$, or from about $0.01\ g/m^2$ to about $4.0\ g/m^2$.

The talc particulate (e.g. microcrystalline talc particulate) may have: (A) a BET specific surface area no less than about $35\ m^2/g$, for example, no less than about $40\ m^2/g$; (B) one or both of (a) a $d_{50}$, by Sedigraph, no greater than about $1.5\ \mu m$, for example, no greater than about $1.0\ \mu m$, or from about $0.1\ \mu m$ to about $2.0\ \mu m$, for example, from about $0.1\ \mu m$ to about $1.5\ \mu m$, or from about $0.1\ \mu m$ to about $1.0\ \mu m$ and (b) a $d_{50}$, by laser, no greater than about $4.0\ \mu m$, for example, no greater than about $3.0\ \mu m$, or from about $1.0\ \mu m$ to about $5.0\ \mu m$, for example, from about $1.0\ \mu m$ to about $4.0\ \mu m$, or from about $1.0\ \mu m$ to about $3.0\ \mu m$; and (C) one or more of (a) a $d_{95}$, by laser, no greater than about $10.0\ \mu m$, for example, no greater than about $7.0\ \mu m$, or from about $4.0\ \mu m$ to about $10.0\ \mu m$, or from about $4.0\ \mu m$ to about $7.0\ \mu m$, (b) a $d_{75}$, by laser, no greater than about $7.0\ \mu m$, for example, no greater than about $5.0\ \mu m$, or from about $2.0\ \mu m$ to about $7.0\ \mu m$, or from about $2.0\ \mu m$ to about $5.0\ \mu m$, (c) a $d_{25}$, by laser, no greater than about $3.0\ \mu m$, for example, no greater than about $2.0\ \mu m$, or from about $0.5\ \mu m$ to about $3.0\ \mu m$, or from about $0.5\ \mu m$ to about $2.0\ \mu m$, (d) a $d_{95}$, by Sedigraph, no greater than about $5.0\ \mu m$, for example, no greater than about $3.0\ \mu m$, or from about $0.5\ \mu m$ to about $5.0\ \mu m$, or from about $0.5\ \mu m$ to about $3.0\ \mu m$, (e) a $d_{75}$, by Sedigraph, no greater than about $3.0\ \mu m$, for example, no greater than about $2.0\ \mu m$, or from about $0.1\ \mu m$ to about $3.0\ \mu m$, or from about $0.1\ \mu m$ to about $2.0\ \mu m$ and (f) a $d_{25}$, by Sedigraph, no greater than about $1.0\ \mu m$, for example, no greater than about $0.5\ \mu m$, or from about $0.1\ \mu m$ to about $1.0\ \mu m$, or from about $0.1\ \mu m$ to about $0.5\ \mu m$.

The talc particulate (e.g. microcrystalline talc particulate) may have: (A) a BET specific surface area no less than about $35\ m^2/g$, for example, no less than about $40\ m^2/g$; (B) one or both of (a) a $d_{50}$, by Sedigraph, no greater than about $1.5\ \mu m$, for example, no greater than about $1.0\ \mu m$, or from about $0.1\ \mu m$ to about $2.0\ \mu m$, for example, from about $0.1\ \mu m$ to about $1.5\ \mu m$, or from about $0.1\ \mu m$ to about $1.0\ \mu m$ and (b) a $d_{50}$, by laser, no greater than about $4.0\ \mu m$, for example, no greater than about $3.0\ \mu m$, or from about $1.0\ \mu m$ to about $5.0\ \mu m$, for example, from about $1.0\ \mu m$ to about $4.0\ \mu m$, or from about $1.0\ \mu m$ to about $3.0\ \mu m$; (C) one or more of (a) a $d_{95}$, by laser, no greater than about $10.0\ \mu m$, for example, no greater than about $7.0\ \mu m$, or from about $4.0\ \mu m$ to about $10.0\ \mu m$, or from about $4.0\ \mu m$ to about $7.0\ \mu m$, (b) a $d_{75}$, by laser, no greater than about $7.0\ \mu m$, for example, no greater than about $5.0\ \mu m$, or from about $2.0\ \mu m$ to about $7.0\ \mu m$, or from about $2.0\ \mu m$ to about $5.0\ \mu m$, (c) a $d_{25}$, by laser, no greater than about $3.0\ \mu m$, for example, no greater than about $2.0\ \mu m$, or from about $0.5\ \mu m$ to about $3.0\ \mu m$, or from about $0.5\ \mu m$ to about $2.0\ \mu m$, (d) a $d_{95}$, by Sedigraph, no greater than about $5.0\ \mu m$, for example, no greater than about $3.0\ \mu m$, or from about $0.5\ \mu m$ to about $5.0\ \mu m$, or from about $0.5\ \mu m$ to about $3.0\ \mu m$, (e) a $d_{75}$, by Sedigraph, no greater than about $3.0\ \mu m$, for example, no greater than about $2.0\ \mu m$, or from about $0.1\ \mu m$ to about $3.0\ \mu m$, or from about $0.1\ \mu m$ to about $2.0\ \mu m$ and (f) a $d_{25}$, by Sedigraph, no greater than about $1.0\ \mu m$, for example, no greater than about $0.5\ \mu m$, or from about $0.1\ \mu m$ to about $1.0\ \mu m$, or from about $0.1\ \mu m$ to about $0.5\ \mu m$; and (D) a Cl no greater than about $7.5\ g/m^2$, for example, from about $0.01\ g/m^2$ to about $7.5\ g/m^2$, or from about $0.01\ g/m^2$ to about $4.0\ g/m^2$.

The talc particulate (e.g. microcrystalline talc particulate) may have an aspect ratio no less than about 50, for example, no less than about 60. The talc particulate (e.g. microcrystalline talc particulate) may have an aspect ratio no greater than about 100, for example, no greater than about 90, or no greater than about 80. The talc particulate (e.g. microcrystalline talc particulate) may have an aspect ratio from about 50 to about 100, for example, from about 60 to about 100, or from about 50 to about 90, or from about 50 to about 80, or from about 60 to about 90. The aspect ratio of the talc particulate (e.g. microcrystalline talc particulate) can be determined using particle size measurements obtained by Sedigraph and laser diffraction according to the method described for randomly oriented disk-shaped particles (i.e. equation (10)) in "A Simple Approximate Formula for the Aspect Ratio of Oblate Particles", by Willi Pabst and Christoph Berthold, Part. Part. Syst. Charact. 24 (2007) 458-463, which is hereby incorporated by reference in its entirety.

The talc particulate (e.g. microcrystalline talc particulate) may be treated with a surface treatment agent. Surface treated talc (e.g. microcrystalline talc) may, for example, be referred to as coated talc (e.g. microcrystalline talc). Surface treatment of the talc (e.g. microcrystalline talc) may serve to reduce or eliminate aggregation of the talc particulate (e.g. microcrystalline talc particulate) and/or enhance incorporation of the talc particulate (e.g. microcrystalline talc particulate) into a polymer composition.

Suitable surface treatment agents for talc particulates (e.g. microcrystalline talc particulates) are described on pages 19 to 21 of International Patent Application Number PCT/EP2022/060065, published as WO 2022/219138 A1, with title "TALC PARTICULATES", which are hereby incorporated by reference.

In certain embodiments, the surface treatment agent comprises or is a fatty acid, and/or a metal salt thereof, for example, stearic acid or a metal stearate, such as magnesium, calcium or zinc stearate. This includes fatty acids having a carbon chain length from C8 to C24 and mixtures of fatty acids having a carbon chain length from C8 to C24.

The surface treatment agent may be added in an amount effective to achieve the desired result.

In certain embodiments, the quantity of surface treatment agent is from about 0.1 % to 5 % by weight with respect to the weight of talc, for example, from about 0.1 % to 2 % by weight with respect to the weight of talc.

A polymer composition in which the talc particulate is incorporated may comprise no less than about 0.1 phr, for example, no less than about 0.5 phr, or no less than about 1 phr, of the surface treatment agent (e.g. a fatty acid, and/or a metal salt thereof, for example, stearic acid). The polymer composition may comprise no more than about 5 phr, for example, no more than about 4 phr, or no more than about 3 phr, or no more than about 2 phr, or no more than about 1.5 phr, or no more than about 1 phr, of the surface treatment agent (e.g. a fatty acid, and/or a metal salt thereof, for example, stearic acid). The polymer composition may comprise from about 0.1 phr to about 5 phr, for example, from about 0.1 phr to about 4 phr, or from about 0.5 phr to about 3 phr, or from about 0.5 phr to about 3 phr, or from about 0.5 phr to about 2 phr, or from about 0.5 phr to about 1.5 phr, of the surface treatment agent (e.g. a fatty acid, and/or a metal salt thereof, for example, stearic acid).

Throughout this specification and the appended claims, the unit "phr" ("parts per hundred rubber") is used, as is standard in the art, to express the mass of a component in a polymer composition relative to the mass of the total polymer (e.g. rubber) content of the composition.

Surface treatment agents may be applied by adding to the talc particulate (e.g. microcrystalline talc particulate) and mixing using conventional methods. Surface treatment agents may be applied during preparation of the talc particulate (e.g. microcrystalline talc particulate) from a relative coarse talc (e.g. microcrystalline talc) starting material and before the talc particulate (e.g. microcrystalline talc particulate) is added to a polymer composition.

It may be that less surface treatment agent is required to incorporate the talc particulate (e.g. microcrystalline talc particulate) successfully into a polymer composition than is required to incorporate an equivalent (e.g. the same) quantity (e.g. weight) of silica or carbon black into the same polymer composition.

In some embodiments, the talc particulate (e.g. microcrystalline talc particulate) is not treated with a surface treatment agent at all (i.e. the talc particulate (e.g. microcrystalline talc particulate) is uncoated talc (e.g. microcrystalline talc)).

*Method for making the talc particulate*

The talc particulate (e.g. microcrystalline talc particulate) may be made by: (a) milling a talc feed material (e.g. a microcrystalline talc feed material) to produce a milled talc material (e.g. milled microcrystalline talc material); and (b) classifying the milled talc material (e.g. milled microcrystalline talc material) to remove a coarse fraction. The talc particulate may be made by any method described on pages 21 to 27 of WO 2022/219138 A1 using any talc feed material as described on pages 27 to 34 of WO 2022/219138 A1, which are hereby incorporated by reference.

*Inner liner*

The (e.g. microcrystalline) talc particulate described herein may be used in an inner liner for a (e.g. pneumatic) tyre. For example, the inner liner may be formed from a polymer composition which comprises the (e.g. microcrystalline) talc particulate.

It will be appreciated that a vehicle tyre (otherwise known as a tire) is a ring-shaped component that surrounds a wheel's rim to transfer a vehicle's load from the axle through the wheel to the ground and to provide traction on the surface over which the wheel travels. A pneumatically inflated tyre also provides a flexible cushion which absorbs shock as the tyre rolls over rough features on the surface. A tyre typically includes a tread, which provides traction, and a body, which provides containment for compressed air.

The inner liner may be an inner liner for a tubeless tyre. Tubeless tyres are pneumatically inflated tyres which do not contain inner tubes. Tubeless tyres have continuous ribs moulded integrally into a bead of the tyre so that they are forced by the pressure of compressed air inside the tyre to seal with flanges of a metal rim of the wheel. A tubeless tyre typically includes an inner liner, which is the innermost layer of the tyre structure, designed to restrict (e.g. prevent) escape of air and thus maintain high internal air pressure within the tyre. Inner liners are typically manufactured using polymeric materials such as elastomeric materials (e.g. natural or synthetic rubbers, for example, halogenated butyl rubbers (also known as halobutyl rubbers) such as brominated butyl rubber and/or chlorinated butyl rubber. Tubeless tyres typically also include one or more body layers between the inner layer and the tread. The one or more body layers may include belt plies, radial plies, bias plies, etc., dependent on the tyre design. These one or more body layers may be made of various materials, including polymers (e.g. rubber, polyester, aramids, etc.) and/or metals (e.g. steel cord).

Alternatively, the inner liner may be an inner liner for a tyre having an inner tube. For example, the inner liner may be an inner liner for the tyre body or an inner liner for the inner tube, or the inner liner may form (e.g. be) the inner tube itself.

The inner liner according to the present invention may be provided independently of the tyre, i.e. such that the inner liner is provided suitable for installation into a tyre. Alternatively, the inner liner according to the present invention may be provided installed in a tyre. Thus, the invention also extends to a tyre comprising the inner liner. The tyre may a tubeless tyre or a tyre having an inner tube.

The polymer composition from which the inner liner is formed may comprise any suitable polymer. For example, the polymer composition may comprise an elastomer such as a synthetic rubber or a natural rubber. The polymer composition may comprise a butyl rubber. The polymer composition may comprise a halogenated butyl rubber. The polymer composition may comprise chlorinated butyl (i.e. chlorobutyl) rubber and/or brominated butyl (i.e. bromobutyl) rubber.

The invention also extends to the polymer composition *per se* comprising the (e.g. microcrystalline) talc particulate. The polymer composition may be suitable for use in forming the inner liner for a (e.g. pneumatic, for example, tubeless or tube-containing) tyre, but it may also be suitable for use in other applications.

It will be understood that the following passages which describe possible characteristics of "the polymer composition" are applicable to the polymer composition *per se* as well as to the polymer composition from which the inner liner is formed.

The talc particulate may be used as an extender filler or a functional filler in the polymer composition. As used herein, the term "functional filler" is understood to mean an additive incorporated into a polymeric composition with a view to enhancing one or more of its physical (e.g., mechanical) properties. An "extender filler" typically modifies the properties of the polymer composition very little and essentially serves to reduce cost.

In certain embodiments, the talc particulate (e.g. microcrystalline talc particulate) may be used as a functional filler in the polymer composition, for example, to modify or enhance one or more physical (e.g. mechanical) properties of the polymer composition.

In certain embodiments, the talc particulate (e.g. microcrystalline talc particulate) is used as an extender filler, for example, to supplement or supplant other filler materials, which may be more expensive or more difficult to incorporate into the polymer composition.

In certain embodiments, the talc particulate (e.g. microcrystalline talc particulate) functions as both an extender filler and as a functional filler.

The polymer composition may comprise no less than about 5 phr (i.e. parts per hundred rubber), for example, no less than about 10 phr, or no less than about 20 phr, or no less than about 30 phr, or no less than about 40 phr, or no less than about 50 phr, or no less than about 60 phr, or no less than about 70 phr, or no less than about 75 phr, or no less than about 80 phr, or no less than about 90 phr, of the talc particulate (e.g. microcrystalline talc particulate). The polymer composition may comprise no more than about 300 phr, for example, no more than about 200 phr, or no more than about 150 phr, or no more than about 125 phr, or no more than about 100 phr, or no more than about 95 phr, or no more than about 90 phr, of the talc particulate (e.g. microcrystalline talc particulate). The polymer composition may comprise from about 5 phr to about 300 phr, for example, from about 20 phr to about 300 phr, or from about 40 phr to about 300 phr, or from about 60 phr to about 300 phr, or from about 75 phr to about 300 phr, or from about 80 phr to about 300 phr, or from about 20 phr to about 200 phr, or from about 40 phr to about 200 phr, or from about 60 phr to about 200 phr, or from about 75 phr to about 200 phr, or from about 80 phr to about 200 phr, or from about 20 phr to about 150 phr, or from about 40 phr to about 150 phr, or from about 60 phr to about 150 phr, or from about 75 phr to about 150 phr, or from about 80 phr to about 150 phr, or from about 20 phr to about 100 phr, or from about 40 phr to about 100 phr, or from about 60 phr to about 100 phr, or from about 75 phr to about 100 phr, or from about 80 phr to about 100 phr, or from about 75 phr to about 125 phr, of the talc particulate (e.g. microcrystalline talc particulate).

The polymer composition may comprise filler other than the talc particulate (e.g. microcrystalline talc particulate).

For example, the polymer composition may comprise one or more minerals other than the talc particulate (e.g. microcrystalline talc particulate). For example, the polymer composition may comprise synthetic silica or silicates (e.g. precipitated silica or silicates), natural silica or silicates, a clay mineral (for example, a hydrous kandite clay such as kaolin, halloysite or ball clay), carbon black, a metal hydroxide such as aluminium trihydroxide or magnesium dihydroxide, an alkaline earth metal carbonate or sulphate, such as calcium carbonate, magnesium carbonate, dolomite, gypsum, an anhydrous (calcined) kandite clay such as metakaolin or fully calcined kaolin, mica, perlite, feldspars, nepheline syenite, wollastonite, diatomaceous earth, barite and/or glass. In certain embodiments, the polymer composition comprises, in addition to the talc particulate (e.g. microcrystalline talc particulate), precipitated silica, a clay mineral such as kaolin or ball clay, diatomaceous earth and/or carbon black.

In certain embodiments, the polymer composition may comprise a talc other than the talc particulate (e.g. microcrystalline talc particulate) of the present invention. In certain embodiments, the polymer composition does not comprise talc other than the talc particulate (e.g. microcrystalline talc particulate) of the present invention.

The filler compounds other than the talc particulate (e.g. microcrystalline talc particulate) may be included during preparation of the polymer composition, or alternatively, during preparation of the talc particulate (e.g. microcrystalline talc particulate), e.g., the talc particulate (e.g. microcrystalline talc particulate) may be mixed and blended with the other filler compound(s), and optionally combined with surface treatment agent.

In certain embodiments, the amount of other filler compound(s) present in the polymer composition is less than about 100 phr, for example, less than about 50 phr, or less than about 25 phr, or less than about 10 phr, or less than about 5 phr, or less than about 1 phr. In certain embodiments, the polymer composition comprises no more than about 50 phr, for example, no more than about 25 phr, or no more than about 10 phr, or no more than about 5 phr, or no more than about 2 phr, or no more than about 1 phr, in total of reinforcing fillers other than the (e.g. microcrystalline) talc particulate. In certain embodiments, the polymer composition comprises no more than about 50 phr, for example, no more than about 25 phr, or no more than about 10 phr, or no more than about 5 phr, or no more than about 2 phr, or no more than about 1 phr, in total of functional fillers other than the (e.g. microcrystalline) talc particulate. In certain embodiments, the polymer composition comprises no more than about 50 phr, for example, no more than about 25 phr, or no more than about 10 phr, or no more than about 5 phr, or no more than about 2 phr, or no more than about 1 phr, in total of fillers (e.g. whether functional or extender) other than the (e.g. microcrystalline) talc particulate. In certain embodiments, the polymer composition is (e.g. substantially) free of reinforcing fillers other than the (e.g. microcrystalline) talc particulate. In certain embodiments, the polymer composition is (e.g. substantially) free of functional fillers other than the (e.g. microcrystalline) talc particulate. In certain embodiments, the polymer composition is (e.g. substantially) free of fillers (e.g. whether functional or extender) other than the (e.g. microcrystalline) talc particulate.

In certain embodiments, the polymer composition comprises no more than about 25 phr, for example, no more than about 10 phr, or no more than about 5 phr, or no more than about 2 phr, or no more than about 1 phr, of carbon black. In certain embodiments, the polymer composition is (e.g. substantially) free of carbon black.

In certain embodiments, the polymer composition comprises no more than about 25 phr, for example, no more than about 10 phr, or no more than about 5 phr, or no more than about 2 phr, or no more than about 1 phr, of silica. In certain embodiments, the polymer composition is (e.g. substantially) free of silica.

In certain embodiments, the polymer composition comprises no more than about 50 phr, for example, no more than about 25 phr, or no more than about 10 phr, or no more than about 5 phr, or no more than about 2 phr, or no more than about 1 phr, of carbon black and silica in combination. In certain embodiments, the polymer composition is (e.g. substantially) free of both carbon black and silica.

The polymer composition may comprise any natural or synthetic polymer or mixture thereof. The polymer may, for example, be thermoplastic or thermoset. The term "polymer" used herein includes homopolymers and/or copolymers, as well as crosslinked and/or entangled polymers.

The term "precursor" as may be applied to the polymer component will be readily understood by one of ordinary skill in the art. For example, suitable precursors may include one or more of: monomers, cross-linking agents, curing systems comprising cross-linking agents and promoters, or any combination thereof. Where the talc particulate (e.g. microcrystalline talc particulate) is mixed with precursors of the polymer, the polymer composition will subsequently be formed by curing and/or polymerising the precursor components to form the desired polymer (e.g. vulcanizing a rubber).

In certain embodiments, the polymer composition comprises (e.g. the polymer content of the polymer composition is) an elastomer such as a synthetic rubber or a natural rubber, for example, a styrene-butadiene rubber or a butyl rubber (e.g. a halogenated butyl rubber, for example, bromo butyl rubber and/or chloro butyl rubber).

In certain embodiments, the polymer composition comprises a halogenated butyl rubber (also known as a halobutyl rubber) such as a brominated butyl rubber (also known as a bromobutyl rubber) and/or a chlorinated butyl rubber (also known as a chlorobutyl rubber). Halogenated butyl rubber (such as bromobutyl rubber and/or chlorobutyl rubber) may be particularly suitable for use in forming the inner liner of a tyre (e.g. a tubeless tyre).

It will be appreciated that butyl rubber is a copolymer of isobutylene (i.e. 2-methylpropene) and isoprene (i.e. 2-methyl-1,3-butadiene). Halogenated (e.g. brominated or chlorinated) butyl rubber can be formed through use of halogenated (e.g. brominated or chlorinated) isoprene. Bromo and chloro rubber can be formed by, for example, brominating or chlorinating butyl rubber by exposure to liquid bromine or chloride or by exposing butyl rubber (for example, in a solvent) to bromine or chloride.

The polymer composition may comprise one single polymer (i.e. the polymer content of the polymer composition may consist essentially of, consist of, or be, one single polymer). Alternatively, the polymer composition may comprise two or more different polymers (i.e. the polymer content of the polymer composition may consist essentially of, consist of, or be, two or more different polymers). The polymer composition may comprise two or more co-vulcanised polymers.

In embodiments in which the polymer composition comprises a halogenated butyl rubber, the polymer content of the polymer composition may consist essentially of, consist of, or be, the halogenated butyl rubber. Alternatively, the polymer composition may comprise the halogenated butyl rubber and one or more other polymers. For example, the polymer composition may comprise the halogenated butyl rubber co-vulcanised with one or more other polymers. For example, the halogenated butyl rubber may be co-vulcanised with one or more other elastomers such as natural rubber, polybutadiene rubber, styrene-butadiene rubber, etc.

In embodiments in which the polymer composition comprises a brominated butyl rubber (i.e. bromobutyl rubber), the polymer content of the polymer composition may consist essentially of, consist of, or be, the brominated butyl rubber (i.e. bromobutyl rubber). Alternatively, the polymer composition may comprise the brominated butyl rubber and one or more other polymers. For example, the polymer composition may comprise the brominated butyl rubber co-vulcanised with one or more other polymers. For example, the brominated butyl rubber may be co-vulcanised with one or more other elastomers such as natural rubber, polybutadiene rubber, styrene-butadiene rubber, etc.

In embodiments in which the polymer composition comprises a chlorinated butyl rubber (i.e. chlorobutyl rubber), the polymer content of the polymer composition may consist essentially of, consist of, or be, the chlorinated butyl rubber (i.e. chlorobutyl rubber). Alternatively, the polymer composition may comprise the chlorinated butyl rubber and one or more other polymers. For example, the polymer composition may comprise the chlorinated butyl rubber co-vulcanised with one or more other polymers. For example, the chlorinated butyl rubber may be co-vulcanised with one or more other elastomers such as natural rubber, polybutadiene rubber, styrene-butadiene rubber, etc.

In embodiments in which the polymer composition comprises bromo and chloro butyl rubber, the polymer content of the polymer composition may consist essentially of, consist of, or be, bromo butyl rubber and chloro butyl rubber. Alternatively, the polymer composition may comprise bromo and chloro butyl rubber and one or more other polymers. For example, the polymer composition may comprise bromo and chloro butyl rubber co-vulcanised with one or more other polymers. For example, the bromo and chloro butyl rubber may be co-vulcanised with one or more other elastomers such as natural rubber, polybutadiene rubber, styrene-butadiene rubber, etc.

The polymer composition may further comprise one or more additives. The one or more additives may be selected from: thickeners, emulsifiers, viscosity modifiers, softeners, homogenisers (such as aliphatic hydrocarbons), tackifiers (such as alkylphenol formaldehyde resins), plasticizers (such as polyethylene glycol), activators (such as zinc oxide), accelerators (such as 2-mercaptobenzothiazole (MBT), mercaptobenzothiazole disulfide (MBTS) or tetramethylthiuram disulfide (DTMT)), rubber process oils (such as paraffinic oil or naphthenic oil), fire retardants (such as aluminium hydroxide), antibacterial agents, anti-mould agents (such as propionic acid), hydrophobic agents (such as silicone oil), stearic acid, sulfur, and/or thermal conductivity regulating agents (such as graphite), or any combination thereof. The polymer composition may comprise no more than about 50 phr, for example, no more than about 40 phr, or no more than about 30 phr, or no more than about 20 phr, or no more than about 15 phr, of such additives in total. The polymer composition may comprise no less than about 1 phr, for example, no less than about 5 phr, or no less than about 10 phr, of such additives in total. The polymer composition may comprise from about 1 phr to about 50 phr, for example, from about 1 phr to about 40 phr, or from about 1 phr to about 30 phr, or from about 10 phr to about 50 phr, or from about 10 phr to about 40 phr, or from about 10 phr to about 30 phr, or from about 10 phr to about 20 phr, of such additives in total.

The polymer composition may comprise halogenated butyl rubber and from about 50 phr to about 150 phr, for example, from about 75 phr to about 125 phr, or from about 80 phr to about 100 phr, of the talc particulate (e.g. microcrystalline talc particulate). The polymer composition may comprise: halogenated butyl rubber; from about 50 phr to about 150 phr, for example, from about 75 phr to about 125 phr, or from about 80 phr to about 100 phr, of the talc particulate (e.g. microcrystalline talc particulate); and no more than about 30 phr, for example, no more than about 20 phr, or no more than about 15 phr, of one or more additives (e.g. processing oil, homogenisers, tackifiers, stearic acid, ZnO, accelerators, sulfur, etc.).

The polymer composition may comprise halogenated butyl rubber and from about 50 phr to about 150 phr, for example, from about 75 phr to about 125 phr, or from about 80 phr to about 100 phr, of the talc particulate (e.g. microcrystalline talc particulate), wherein the polymer composition comprises no more than about 30 phr, for example, no more than about 20 phr, or no more than about 10 phr, or no more than about 5 phr, or no more than about 1 phr, mineral fillers (e.g. carbon black, silica and/or another talc particulate) other than the talc particulate (e.g. microcrystalline talc particulate) described herein. The polymer composition may comprise: halogenated butyl rubber; from about 50 phr to about 150 phr, for example, from about 75 phr to about 125 phr, or from about 80 phr to about 100 phr, of the talc particulate (e.g. microcrystalline talc particulate); and no more than about 30 phr, for example, no more than about 20 phr, or no more than about 15 phr, of one or more additives (e.g. processing oil, homogenisers, tackifiers, stearic acid, ZnO, accelerators, sulfur, etc.); wherein the polymer composition comprises no more than about 30 phr, for example, no more than about 20 phr, or no more than about 10 phr, or no more than about 5 phr, or no more than about 1 phr, mineral fillers (e.g. carbon black, silica and/or another talc particulate) other than the talc particulate (e.g. microcrystalline talc particulate) described herein.

The polymer composition may comprise bromobutyl rubber and from about 50 phr to about 150 phr, for example, from about 75 phr to about 125 phr, or from about 80 phr to about 100 phr, of the talc particulate (e.g. microcrystalline talc particulate). The polymer composition may comprise: bromobutyl rubber; from about 50 phr to about 150 phr, for example, from about 75 phr to about 125 phr, or from about 80 phr to about 100 phr, of the talc particulate (e.g. microcrystalline talc particulate); and no more than about 30 phr, for example, no more than about 20 phr, or no more than about 15 phr, of one or more additives (e.g. processing oil, homogenisers, tackifiers, stearic acid, ZnO, accelerators, sulfur, etc.).

The polymer composition may comprise bromobutyl rubber and from about 50 phr to about 150 phr, for example, from about 75 phr to about 125 phr, or from about 80 phr to about 100 phr, of the talc particulate (e.g. microcrystalline talc particulate), wherein the polymer composition comprises no more than about 30 phr, for example, no more than about 20 phr, or no more than about 10 phr, or no more than about 5 phr, or no more than about 1 phr, mineral fillers (e.g. carbon black, silica and/or another talc particulate) other than the talc particulate (e.g. microcrystalline talc particulate) described herein. The polymer composition may comprise: bromobutyl rubber; from about 50 phr to about 150 phr, for example, from about 75 phr to about 125 phr, or from about 80 phr to about 100 phr, of the talc particulate (e.g. microcrystalline talc particulate); and no more than about 30 phr, for example, no more than about 20 phr, or no more than about 15 phr, of one or more additives (e.g. processing oil, homogenisers, tackifiers, stearic acid, ZnO, accelerators, sulfur, etc.); wherein the polymer composition comprises no more than about 30 phr, for example, no more than about 20 phr, or no more than about 10 phr, or no more than about 5 phr, or no more than about 1 phr, mineral fillers (e.g. carbon black, silica and/or another talc particulate) other than the talc particulate (e.g. microcrystalline talc particulate) described herein.

In certain embodiments, the polymer content of the polymer composition consists of rubber, for example, butyl rubber such as halogenated butyl rubber, for example, bromobutyl rubber and/or chlorobutyl rubber. The polymer composition may be a rubber composition.

For example, the polymer (e.g. rubber) content of the polymer composition (e.g. rubber composition) may consist of halogenated butyl rubber and the polymer (e.g. rubber) composition may further comprise from about 50 phr to about 150 phr, for example, from about 75 phr to about 125 phr, or from about 80 phr to about 100 phr, of the talc particulate (e.g. microcrystalline talc particulate). The polymer (e.g. rubber) content of the polymer composition (e.g. rubber composition) may consist of halogenated butyl rubber and the polymer (e.g. rubber) composition may further comprise: from about 50 phr to about 150 phr, for example, from about 75 phr to about 125 phr, or from about 80 phr to about 100 phr, of the talc particulate (e.g. microcrystalline talc particulate); and no more than about 30 phr, for example, no more than about 20 phr, or no more than about 15 phr, of one or more additives (e.g. processing oil, homogenisers, tackifiers, stearic acid, ZnO, accelerators, sulfur, etc.). The polymer (e.g. rubber) content of the polymer composition (e.g. rubber composition) may consist of halogenated butyl rubber and the polymer (e.g. rubber) composition may further comprise: from about 50 phr to about 150 phr, for example, from about 75 phr to about 125 phr, or from about 80 phr to about 100 phr, of the talc particulate (e.g. microcrystalline talc particulate), wherein the polymer composition comprises no more than about 30 phr, for example, no more than about 20 phr, or no more than about 10 phr, or no more than about 5 phr, or no more than about 1 phr, mineral fillers (e.g. carbon black, silica and/or another talc particulate) other than the talc particulate (e.g. microcrystalline talc particulate) described herein.

The polymer (e.g. rubber) content of the polymer composition (e.g. rubber composition) may consist of bromobutyl rubber and the polymer (e.g. rubber) composition may further comprise from about 50 phr to about 150 phr, for example, from about 75 phr to about 125 phr, or from about 80 phr to about 100 phr, of the talc particulate (e.g. microcrystalline talc particulate). The polymer (e.g. rubber) content of the polymer composition (e.g. rubber composition) may consist of bromobutyl rubber and the polymer (e.g. rubber) composition may further comprise: from about 50 phr to about 150 phr, for example, from about 75 phr to about 125 phr, or from about 80 phr to about 100 phr, of the talc particulate (e.g. microcrystalline talc particulate); and no more than about 30 phr, for example, no more than about 20 phr, or no more than about 15 phr, of one or more additives (e.g. processing oil, homogenisers, tackifiers, stearic acid, ZnO, accelerators, sulfur, etc.). The polymer (e.g. rubber) content of the polymer composition (e.g. rubber composition) may consist of bromobutyl rubber and the polymer (e.g. rubber) composition may further comprise from about 50 phr to about 150 phr, for example, from about 75 phr to about 125 phr, or from about 80 phr to about 100 phr, of the talc particulate (e.g. microcrystalline talc particulate), wherein the polymer composition comprises no more than about 30 phr, for example, no more than about 20 phr, or no more than about 10 phr, or no more than about 5 phr, or no more than about 1 phr, mineral fillers (e.g. carbon black, silica and/or another talc particulate) other than the talc particulate (e.g. microcrystalline talc particulate) described herein.

In some embodiments, the polymer composition consists of: halogenated butyl rubber; from about 50 phr to about 150 phr, for example, from about 75 phr to about 125 phr, or from about 80 phr to about 100 phr, of the talc particulate (e.g. microcrystalline talc particulate); and no more than about 30 phr, for example, no more than about 20 phr, or no more than about 15 phr, of one or more additives (e.g. processing oil, homogenisers, tackifiers, stearic acid, ZnO, accelerators, sulfur, etc.). In some embodiments, the polymer composition consists of: bromobutyl rubber; from about 50 phr to about 150 phr, for example, from about 75 phr to about 125 phr, or from about 80 phr to about 100 phr, of the talc particulate (e.g. microcrystalline talc particulate); and no more than about 30 phr, for example, no more than about 20 phr, or no more than about 15 phr, of one or more additives (e.g. processing oil, homogenisers, tackifiers, stearic acid, ZnO, accelerators, sulfur, etc.).

The polymer composition may have a $t_{90}$ vulcanization time (i.e. the time to 90% vulcanization), as measured using a rotorless curemeter according to ISO 6502 (Part 3), of no less than about 0.5 minutes, for example, no less than about 2 minutes, or no less than about 4 minutes, or no less than about 6 minutes, or no less than about 8 minutes. The polymer composition may have a $t_{90}$ vulcanization time, as measured using a rotorless curemeter according to ISO 6502 (Part 3), of no greater than about 30 minutes, for example, no greater than about 20 minutes, or no greater than about 10 minutes. The polymer composition may have a $t_{90}$ vulcanization time, as measured using a rotorless curemeter according to ISO 6502 (Part 3), from about 0.5 to about 30 minutes, for example, from about 0.5 to about 20 minutes, or from about 0.5 to about 10 minutes, or from about 1 to about 10 minutes, or from about 4 to about 10 minutes, or from about 6 to about 10 minutes, or from about 7 to about 10 minutes, or from about 8 to about 10 minutes.

The polymer composition may have a crosslink density, as measured using a rotorless curemeter according to ISO 6502 (Part 3), no less than about 0.5, for example, no less than about 1, or no less than about 2, or no less than about 3 (e.g. 3.0). The polymer composition may have a crosslink density, as measured using a rotorless curemeter according to ISO 6502 (Part 3), of no greater than about 20, for example, no greater than about 10, or no greater than about 5, or no greater than about 4, or no greater than about 3.5. The polymer composition may have a crosslink density, as measured using a rotorless curemeter according to ISO 6502 (Part 3), from about 0.5 to about 20, for example, from about 0.5 to about 10, or from about 1 to about 10, or from about 1 to about 5, or from about 2 to about 4, or from about 3 to about 3.5, or from about 3.0 to about 3.5.

The polymer composition may have a Mooney viscosity at 100°C, measured using a shearing-disc viscometer according to ISO 289-1, no greater than about 100 Mooney Units (MU), for example, no greater than about 90 MU, or no greater than about 85 MU, or no greater than about 84 MU. The polymer composition may have a Mooney viscosity at 100°C, measured using a shearing-disc viscometer according to ISO 289-1, no less than about 40 MU, for example, no less than about 50 MU, or no less than about 60 MU, or no less than about 70 MU, or no less than about 80 MU. The polymer composition may have a Mooney viscosity at 100°C, measured using a shearing-disc viscometer according to ISO 289-1, from about 40 MU to about 90 MU, for example, from about 50 MU to about 90 MU, or from about 60 MU to about 90 MU, or from about 70 MU to about 90 MU, or from about 80 MU to about 85 MU, or from about 80 MU to about 84 MU.

The polymer composition may have a modulus (i.e. tensile modulus) at 50 % elongation, $M_{50}$, as measured according to ISO 37, of no less than about 0.5 MPa, for example, no less than about 0.8 MPa, or no less than about 0.9 MPa, or no less than about 1.0 MPa, or no less than about 1.1 MPa. The polymer composition may have a modulus (i.e. tensile modulus) at 50 % elongation, $M_{50}$, as measured according to ISO 37, of no more than about 1.7 MPa. The polymer composition may have a modulus (i.e. tensile modulus) at 50 % elongation, $M_{50}$, as measured according to ISO 37, from about 0.5 MPa to about 1.7 MPa, for example, or from about 0.8 MPa to about 1.7 MPa, or from about 0.9 MPa to about 1.7 MPa, or from about 1.0 MPa to about 1.5 MPa.

The polymer composition may have a modulus (i.e. tensile modulus) at 100 % elongation, $M_{100}$, as measured according to ISO 37, of no less than about 1.0 MPa, for example, no less than about 1.2 MPa, or no less than about 1.4 MPa, or no less than about 1.5 MPa, or no less than about 1.6 MPa. The polymer composition may have a modulus (i.e. tensile modulus) at 100 % elongation, $M_{100}$, as measured according to ISO 37, of no more than about 2.5 MPa. The polymer composition may have a modulus (i.e. tensile modulus) at 100 % elongation, $M_{100}$, as measured according to ISO 37, from about 1.0 MPa to about 2.5 MPa, for example, from about 1.2 MPa to about 2.5 MPa, or from about 1.4 MPa to about 2.5 MPa, or from about 1.5 MPa to about 2.5 MPa, or from about 1.6 MPa to about 2.5 MPa, or from about 1.8 MPa to about 2.5 MPa.

The polymer composition may have a modulus (i.e. tensile modulus) at 300 % elongation, $M_{300}$, as measured according to ISO 37, of no less than about 1.5 MPa, for example, no less than about 1.6 MPa, or no less than about 2.0 MPa, or no less than about 2.5 MPa, or no less than about 3.0 MPa, or no less than about 3.2 MPa, or no less than about 3.3 MPa, or no less than about 3.4 MPa. The polymer composition may have a modulus (i.e. tensile modulus) at 300 % elongation, $M_{300}$, as measured according to ISO 37, of no more than about 9.0 MPa. The polymer composition may have a modulus (i.e. tensile modulus) at 300 % elongation, $M_{300}$, as measured according to ISO 37, of from about 1.5 MPa to about 9.0 MPa, for example, from about 1.6 MPa to about 5.5 MPa, , or from about 2.0 MPa to about 5.5 MPa, or from about 2.2 MPa to about 4.5 MPa, or from about 2.6 MPa to about 4.5 MPa, or from about 2.8 MPa to about 4.5 MPa,.

The polymer composition may have a tensile strength, as measured according to ISO 37, no less than about 3 MPa, for example, no less than about 4 MPa, or no less than about 5 MPa, or no less than about 6 MPa, or no less than about 7 MPa, no less than about 8 MPa, or no less than about 9 MPa, or no less than about 9.5 MPa. The polymer composition may have a tensile strength, as measured according to ISO 37, no more than about 15 M Pa. The polymer composition may have a tensile strength, as measured according to ISO 37, from about 3 MPa to about 15 MPa, for example, from about 4 MPa to about 15 MPa, or from about 5 MPa to about 15 MPa, or from about 6 MPa to about 15 MPa, or from about 8 MPa to about 15 MPa, or from about 9 MPa to about 15 MPa, or from about 10 MPa to about 15 MPa.

The polymer composition may have an elongation at break, as measured according to ISO 37, of no less than about 400 %, for example, no less than about 600 %, or no less than about 700 %, or no less than about 800 %. The polymer composition may have an elongation at break, as measured according to ISO 37, of no more than about 1500 %. The polymer composition may have an elongation at break, as measured according to ISO 37, from about 400 % to about 1500 %, for example, from about 600 % to about 1500 %, or from about 700 % to about 1500 %, or from about 800 % to about 1500 %, or from about 700 % to about 1100.

The polymer composition may have a tear resistance, as measured according to ISO 34, no less than about 15 N/mm, for example, no less than about 20 N/mm, or no less than about 25 N/mm, or no less than about 29 N/mm, or no less than about 30 N/mm, or no less than about 31 N/mm. The polymer composition may have a tear resistance, as measured according to ISO 34, no more than about 40 N/mm. The polymer composition may have a tear resistance, as measured according to ISO 34, from about 15 N/mm to about 40 N/mm, for example, from about 20 N/mm to about 40 N/mm, or from about 20 N/mm to about 35 N/mm, or from about 30 N/mm to about 35 N/mm.

The polymer composition may have a Shore A hardness, measured according to ISO 7619-1, no less than about 30, for example, no less than about 40, or no less than about 42. The polymer composition may have a Shore A hardness, measured according to ISO 7619-1, no more than about 70, for example, no more than about 60, or no more than about 55, or no more than about 50, or no more than about 46. The polymer composition may have a Shore A hardness, measured according to ISO 7619-1, from about 30 to about 70, for example, from about 40 to about 70, or from about 40 to about 60, or from about 30 to about 55, or from about 40 to about 55, or from about 30 to about 52, or from about 40 to about 52, or from about 42 to about 46.

The polymer composition may have an oxygen permeability characterised by an oxygen transmission rate, measured at room temperature (23°C) according to ISO 2782, no less than about $2.0 \times 10^{-8}$ mol/(m$^2$s), for example, no less than about $2.5 \times 10^{-8}$ mol/(m$^2$s), or no less than about $3.0 \times 10^{-8}$ mol/(m$^2$s), or no less than about $3.1 \times 10^{-8}$ mol/(m$^2$s), or no less than about $3.2 \times 10^{-8}$ mol/(m$^2$s). The polymer composition may have an oxygen permeability characterised by an oxygen transmission rate, measured at room temperature (23°C) according to ISO 2782, no more than about $5.0 \times 10^{-8}$ mol/(m$^2$s), for example, no more than about $4.0 \times 10^{-8}$ mol/(m$^2$s), or no more than about $3.5 \times 10^{-8}$ mol/(m$^2$s), or no more than about $3.3 \times 10^{-8}$ mol/(m$^2$s), or no more than about $3.2 \times 10^{-8}$ mol/(m$^2$s). The polymer composition may have an oxygen permeability characterised by an oxygen transmission rate, measured at room temperature (23°C) according to ISO 2782, from about $2.0 \times 10^{-8}$ mol/(m$^2$s) to about $5.0 \times 10^{-8}$ mol/(m$^2$s), for example, from about $2.5 \times 10^{-8}$ mol/(m$^2$s) to about $4.0 \times 10^{-8}$ mol/(m$^2$s), or from about $3.0 \times 10^{-8}$ mol/(m$^2$s) to about $3.5 \times 10^{-8}$ mol/(m$^2$s), or from about $3.1 \times 10^{-8}$ mol/(m$^2$s) to about $3.3 \times 10^{-8}$ mol/(m$^2$s).

The polymer composition may have an oxygen permeability characterised by an oxygen permeation rate, measured at room temperature (23°C) according to ISO 2782, of no less than about $1.0 \times 10^{-8}$ (mol/$\mu$m)/(m$^2$s), for example, no less than about $1.4 \times 10^{-8}$ (mol/$\mu$m)/(m$^2$s), or no less than about $1.5 \times 10^{-8}$ (mol/$\mu$m)/(m$^2$s), or no less than about $1.6 \times 10^{-8}$ (mol/$\mu$m)/(m$^2$s), or no less than about $1.7 \times 10^{-8}$ (mol/$\mu$m)/(m$^2$s). The polymer composition may have an oxygen permeability characterised by an oxygen permeation rate, measured at room temperature (23°C) according to ISO 2782, of no more than about $3.0 \times 10^{-8}$ (mol/$\mu$m)/(m$^2$s), for example, no more than about $2.6 \times 10^{-8}$ (mol/$\mu$m)/(m$^2$s), or no more than about $2.4 \times 10^{-8}$ (mol/$\mu$m)/(m$^2$s), or no more than about $2.2 \times 10^{-8}$ (mol/$\mu$m)/(m$^2$s), or no more than about $2.0 \times 10^{-8}$ (mol/$\mu$m)/(m$^2$s), or no more than about $1.8 \times 10^{-8}$ (mol/$\mu$m)/(m$^2$s). The polymer composition may have an oxygen permeability characterised by an oxygen permeation rate, measured at room temperature (23°C) according to ISO 2782, from about $1.0 \times 10^{-8}$ (mol/$\mu$m)/(m$^2$s) to about $3.0 \times 10^{-8}$ (mol/$\mu$m)/(m$^2$s), for example, from about $1.2 \times 10^{-8}$ (mol/$\mu$m)/(m$^2$s) to about $2.4 \times 10^{-8}$ (mol/$\mu$m)/(m$^2$s), or from about $1.5 \times 10^{-8}$ (mol/$\mu$m)/(m$^2$s) to about $3.2 \times 10^{-8}$ (mol/$\mu$m)/(m$^2$s), or from about $1.5 \times 10^{-8}$ (mol/$\mu$m)/(m$^2$s) to about $3.0 \times 10^{-8}$ (mol/$\mu$m)/(m$^2$s), or from about $1.6 \times 10^{-8}$ (mol/$\mu$m)/(m$^2$s) to about $1.9 \times 10^{-8}$ (mol/$\mu$m)/(m$^2$s), or from about $1.7 \times 10^{-8}$ (mol/$\mu$m)/(m$^2$s) to about $1.9 \times 10^{-8}$ (mol/$\mu$m)/(m$^2$s).

The polymer composition may have an oxygen permeability characterised by an oxygen transmission rate, measured at room temperature (23°C) according to ISO 2782, of no less than about 30 cm$^3$/(m$^2$-day), for example, no less than about 40 cc/(m$^2$-day), or no less than about 50 cm$^3$/(m$^2$-day), or no less than about 60 cm$^3$/(m$^2$-day), or no less than about 62 cm$^3$/(m$^2$-day). The polymer composition may have an oxygen permeability characterised by an oxygen transmission rate, measured at room temperature (23°C) according to ISO 2782, of no more than about 90 cm$^3$/(m$^2$-day), for example, no more than about 80 cm$^3$/(m$^2$-day), or no more than about 70 cm$^3$/(m$^2$-day), or no more than about 65 cm$^3$/(m$^2$-day), or no more than about 64 cm$^3$/(m$^2$-day). The polymer composition may have an oxygen permeability characterised by an oxygen transmission rate, measured at room temperature (23°C) according to ISO 2782, from about 30 cm$^3$/(m$^2$-day) to about 90 cm$^3$/(m$^2$-day), for example, from about 40 cm$^3$/(m$^2$-day) to about 80 cm$^3$/(m$^2$-day), or from about 50 cm$^3$/(m$^2$-day) to about 70 cm$^3$/(m$^2$-day), or from about 55 cm$^3$/(m$^2$-day) to about 70 cm$^3$/(m$^2$-day), or from about 60 cm$^3$/(m$^2$-day) to about 65 cm$^3$/(m$^2$-day), or from about 62 cm$^3$/(m$^2$-day) to about 64 cm$^3$/(m$^2$-day).

The polymer composition may have an oxygen permeability characterised by an oxygen permeation rate, measured at room temperature (23°C) according to ISO 2782, of no less than about 25000 (cm$^3$/$\mu$m)/(m$^2$-day), for example, no less than about 30000 (cm$^3$/$\mu$m)/(m$^2$-day), or no less than about 32000 (cm$^3$/$\mu$m)/(m$^2$-day), or no less than about 33000 (cm$^3$/$\mu$m)/(m$^2$-day), or no less than about 34000 (cm$^3$/$\mu$m)/(m$^2$-day). The polymer composition may have an oxygen permeability characterised by an oxygen permeation rate, measuring at room temperature (23°C) according to ISO 2782, of no more than about 50000 (cm$^3$/$\mu$m)/(m$^2$-day), for example, no more than about 45000 (cm$^3$/$\mu$m)/(m$^2$-day), or no more than about 40000 (cm$^3$/$\mu$m)/(m$^2$-day), or no more than about 36000 (cm$^3$/$\mu$m)/(m$^2$-day), or no more than about 35000 (cm$^3$/$\mu$m)/(m$^2$-day). The polymer composition may have an oxygen permeability characterised by an oxygen permeation rate, measured at room temperature (23°C) according to ISO 2782, from about 25000 (cm$^3$/$\mu$m)/(m$^2$-day) to about 50000 (cm$^3$/$\mu$m)/(m$^2$-day), for example, from about 30000 (cm$^3$/$\mu$m)/(m$^2$-day) to about 45000 (cm$^3$/$\mu$m)/(m$^2$-day), or from about 30000 (cm$^3$/$\mu$m)/(m$^2$-day) to about 40000 (cm$^3$/$\mu$m)/(m$^2$-day), or from about 30000 (cm$^3$/$\mu$m)/(m$^2$-day) to about 36000 (cm$^3$/$\mu$m)/(m$^2$-day), or from about 32000 (cm$^3$/$\mu$m)/(m$^2$-day) to about 36000 (cm$^3$/$\mu$m)/(m$^2$-day), or from about 34000 (cm$^3$/$\mu$m)/(m$^2$-day) to about 35000 (cm$^3$/$\mu$m)/(m$^2$-day).

*Method of making the polymer composition*

The polymer composition may be prepared by combining a polymer or polymer precursors with the talc particulate (e.g. microcrystalline talc particulate) of the present invention and any other optional components. Where the talc particulate (e.g. microcrystalline talc particulate) (and any other optional components) are combined with polymer precursors, the resulting combination of the polymer precursors, talc particulate (e.g. microcrystalline talc particulate) (and other optional components) may be cured.

The polymer composition can be prepared by mixing of the components thereof (except the talc particulate (e.g. microcrystalline talc particulate)) intimately together. The talc particulate (e.g. microcrystalline talc particulate) may then be suitably blended, e.g., dry blended, with the mixture of components and any desired additional components, before processing to form a final polymer composite or article.

The polymer composition may, for example, be in accordance with any embodiment disclosed herein.

In some embodiments, a method of making the polymer composition comprises combining halogenated butyl rubber (e.g. bromobutyl rubber and/or chlorobutyl rubber), or precursors therefor, with the (e.g. microcrystalline) talc particulate.

Preparation of the polymer compositions of the present invention can be accomplished by any suitable mixing method known in the art, as will be readily apparent to one of ordinary skill in the art. Such methods include, for example, dry blending of the individual components or precursors thereof and subsequent processing in a conventional manner. Certain of the ingredients can, if desired, be pre-mixed before addition to the compounding mixture.

For the preparation of cross-linked or cured polymer compositions such as halogenated butyl rubber, a blend of uncured components or their precursors, and, if desired, the talc particulate (e.g. microcrystalline talc particulate) and any desired non-talc component(s), will be contacted under suitable conditions of heat, pressure and/or light with an effective amount of any suitable cross-linking agent or curing system, according to the nature and amount of the polymer used, in order to cross-link and/or cure the polymer.

The polymer compositions of the present invention may be prepared by any suitable methods (for example, using a two-roll mill and/or an internal mixer) described on pages 69 to 74 of WO 2022/219138 A1, which are hereby incorporated by reference.

The polymer composition can be processed to form, or to be incorporated in, articles of commerce in any suitable way, as described herein. The articles which may be formed from the polymer composition are many and various. Examples include tyres, inner liners for tyres, shoe soles (e.g. shoe outsoles), conveyor belts, V-belts and caterpillar treads (e.g. caterpillar tread blocks).

*Uses of the talc particulate*

The talc particulate (e.g. microcrystalline talc particulate) may be used in a polymer composition to reduce the oxygen permeability of the polymer composition.

The oxygen permeability of the polymer composition may be characterised by the oxygen permeation rate, as measured at room temperature (23°C) according to ISO 2782, or by the oxygen transmission rate, as measured at room temperature (23°C) according to ISO 2782.

Use of the talc particulate (e.g. microcrystalline talc particulate) in the polymer composition may reduce the oxygen permeability of the polymer composition as compared to an equivalent polymer composition (e.g. having the same polymer content) lacking a talc particulate reinforcing filler.

Use of the talc particulate (e.g. microcrystalline talc particulate) in the polymer composition may reduce the oxygen permeability of the polymer composition as compared to an equivalent polymer composition (e.g. having the same polymer content) containing carbon black as a reinforcing filler but lacking a talc particulate reinforcing filler.

The polymer composition may comprise a halogenated butyl rubber such as bromobutyl rubber and/or chlorobutyl rubber. The polymer content of the polymer composition may consist of a halogenated butyl rubber such as bromobutyl rubber and/or chlorobutyl rubber.

In some embodiments, the invention extends to the use of the talc particulate (e.g. microcrystalline talc particulate) in bromobutyl rubber to reduce the oxygen permeability of the bromobutyl rubber.

In some embodiments, the invention extends to the use of the talc particulate (e.g. microcrystalline talc particulate) in an inner liner for a tyre (e.g. a tubeless tyre or a tyre having an inner tube) to reduce the oxygen permeability of the inner liner. The inner liner may be formed from a polymer composition comprising bromobutyl rubber (e.g. a polymer composition in which the polymer component consists of bromobutyl rubber).

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

### EXAMPLES

Example 1

A microcrystalline talc particulate (Ex. 1) was prepared by milling and classifying a microcrystalline talc feed material. The microcrystalline talc particulate Ex. 1 of the present application corresponds to, and was prepared by the same method as, microcrystalline talc Ex. 2 described in Example 1 on pages 81 to 83 of International Patent Application No. PCT/EP2022/060065, published as International Publication No. WO 2022/219138 A1, entitled "TALC PARTICULATES" and filed in the name of IMERTECH SAS on 14 April 2022, which are hereby incorporated by reference. The microcrystalline talc particulate Ex. 1 has an aspect ratio of 65, as measured according to "A Simple Approximate Formula for the Aspect Ratio of Oblate Particles", by Willi Pabst and Christoph Berthold, Part. Part. Syst. Charact. 24 (2007) 458-463.

The particle size distribution (by both Sedigraph and Malvern laser scattering), BET specific surface area, Minolta Y whiteness, and the CIElab L* and b* values, were analysed for microcrystalline talc particulate Ex. 1. The methods for obtaining the particle size distribution and the BET specific surface area were the same as those described in WO 2022/219138 A1. The results are shown in Table 2.

Table 2.

|  | Ex. 1 |
|---|---|
| **Sedigraph** | |
| $d_{95}$ (μm) | 1.4 |
| $d_{75}$ (μm) | 0.8 |
| $d_{50}$ (μm) | 0.5 |
| $d_{25}$ (μm) | 0.3 |
| **Laser** | |
| $d_{95}$ (μm) | 6.3 |
| $d_{75}$ (μm) | 3.8 |
| $d_{50}$ (μm) | 2.5 |
| $d_{25}$ (μm) | 1.7 |

(continued)

| Other Measurements | |
|---|---|
| **BET ($m^2/g$)** | 48.7 |
| **Minolta Y** | 94 |
| **L\*** | 97.63 |
| **b\*** | 1.28 |

The crystallinity index, CI, defined as the ratio of the number of TOT layers per coherent scattering domain, N(TOT), to the BET specific surface area, was determined for Ex. 1 by the method described hereinabove. The result was about 1.2 $g/m^2$.

Six bromobutyl rubber formulations (F. 1 to F. 6) having the compositions (measured in parts per hundred rubber (phr)) set out in Table 3 were prepared on a laboratory two-roll mill (available from Gibitre Instruments srl) with a friction ratio of 18:24, by the process set out in Table 4.

Table 3.

| | F. 1 | F. 2 | F. 3 | F. 4 | F. 5 | F. 6 |
|---|---|---|---|---|---|---|
| **Bromobutyl copolymer\*** | 100 | 100 | 100 | 100 | 100 | 100 |
| **Carbon black\*\*** | 60 | 30 | - | - | - | - |
| **HAR talc\*\*\*** | - | 45 | 90 | 73.5 | 68.5 | - |
| **Silica†** | - | - | - | 5.3 | 10.3 | - |
| **Ex. 1** | - | - | - | - | - | 90 |
| **Paraffinic oil** | 8.5 | 8.5 | 5 | 5 | 5 | 5 |
| **Tackifier††** | 2 | 2 | 2 | 2 | 2 | 2 |
| **Homogenizing agent†††** | 2 | 2 | 2 | 2 | 2 | 2 |
| **Stearic acid** | 1 | 1 | 1 | 1 | 1 | 1 |
| **ZnO** | 2 | 2 | 2 | 2 | 2 | 2 |
| **MBTS‡** | 1.3 | 1.3 | 1.3 | 1.3 | 1.3 | 1.3 |
| **Sulfur** | 0.5 | 0.5 | 0.5 | 0.5 | 0.5 | 0.5 |

\*Commercially available brominated copolymer of isobutylene and isoprene;
\*\*Commercially available carbon black having an iodine adsorption number of 36 g/kg and an oil absorption number of 90 $cm^3/100g$ ; \*\*\*Commercially available high-aspect ratio talc particulate having a $d_{50}$ by Sedigraph of 1 $\mu$m, a $d_{50}$ by laser of 6 $\mu$m and a BET specific surface area of 22 $m^2/g$; † Commercially available precipitated silica having a BET specific surface area of 120 $m^2/g$; ††Commercially available tackifier comprising alkylphenol formaldehyde resin; †††Commercially available homogenizing agent comprising a mixture of aliphatic hydrocarbons; ‡Mercaptobenzothiazole disulfide.

Table 4.

| Time (minutes) | Incorporation or task | Roll temperature (°C) | Roll spacing (mm) |
|---|---|---|---|
| 0 to 5 | Plasticizing the rubber | 40 | 1/1.5 |
| 5 to 15 | add white filler and oil | 40 | 2/2.5 |
| 15 | increase temperature to 90°C | - | - |
| +6 | add tackifier, homogenizing agent and stearic acid | 90 | 2/2.5 |

(continued)

| Time (minutes) | Incorporation or task | Roll temperature (°C) | Roll spacing (mm) |
|---|---|---|---|
| | mixing by lowering the temperature | | |
| +6 | Accelerators and sulfur | 40 | 2/2.5 |
| +5 | mixing and thickness decrease to 1 mm (3 to 4 times) | | |
| +2 | Sheet at correct thickness before moulding and vulcanisation | | |

Table 5 shows the minimum torque measure (ML), the maximum torque measure (MH), the crosslink density ($\Delta$C), the ts1 scorch time, the ts2 scorch time, the vulcanization time to 50 % cure (t50), the vulcanization time to 90 % cure (t90) and the Mooney viscosity at 100°C (MV) for each of the formulations F. 1 to F. 6. ML, MH, $\Delta$C, ts1, ts2, t50 and t90 were measured using a moving die rheometer according to ISO - 6502. The Mooney viscosity was measured using a Mooney viscometer according to ISO 289-1.

Table 5.

| | F. 1 | F. 2 | F. 3 | F. 4 | F. 5 | F. 6 |
|---|---|---|---|---|---|---|
| ML (dNm) | 1.32 | 1.36 | 1.71 | 1.59 | 1.87 | 1.78 |
| MH (dNm) | 5.60 | 4.51 | 4.49 | 4.31 | 4.93 | 5.07 |
| $\Delta$C (dNm) | 4.28 | 3.15 | 2.78 | 2.72 | 3.06 | 3.29 |
| ts1 (min) | 0.96 | 1.18 | 1.46 | 1.69 | 1.82 | 3.09 |
| ts2 (min) | 1.35 | 1.95 | 3.30 | 3.44 | 2.98 | 5.01 |
| t50 (min) | 1.4 | 1.52 | 1.89 | 2.06 | 2.33 | 4.25 |
| t90 (min) | 3.79 | 4.69 | 7.28 | 6.95 | 7.08 | 8.82 |
| MV (MU) | 84.44 | 73.75 | 75.05 | 76.97 | 81.91 | 83.39 |

Physical properties including the modulus at 50 % elongation ($M_{50}$), modulus at 100 % elongation ($M_{100}$), modulus at 300 % elongation ($M_{300}$), tensile strength (TS), elongation at break (Elong.), tear resistance (TR), Shore A hardness (H), oxygen permeability transmission rate ($O_2$ TR) and permeation rate ($O_2$ PR) were measured for each of the formulations F. 1 to F. 6. Each property was measured from ten different samples and an average obtained. The results are shown in Table 6 along with corresponding standard deviations (a) below each measurement. Tensile properties were measured according to ISO 37. Tear resistance was measured according to ISO 34. Shore A hardness was measured according to ISO 7619-1. Oxygen permeability was measured according to ISO 2782 at a controlled room temperature of 23°C.

Table 6.

| | F. 1 | F. 2 | F. 3 | F. 4 | F. 5 | F. 6 |
|---|---|---|---|---|---|---|
| $M_{50}$ (MPa) | 0.7 | 1.0 | 1.3 | 1.2 | 1.2 | 1.1 |
| $\sigma$ ($M_{50}$) | 0 | 0.1 | 0 | 0 | 0 | 0 |
| $M_{100}$ (MPa) | 1.2 | 1.5 | 2.0 | 1.8 | 1.8 | 1.6 |
| $\sigma$ ($M_{100}$) | 0 | 0.1 | 0.1 | 0.1 | 0.1 | 0 |
| $M_{300}$ (MPa) | 5.4 | 3.7 | 3.7 | 3.6 | 3.6 | 3.4 |
| $\sigma$ ($M_{300}$) | 0.1 | 0.3 | 0.1 | 0.1 | 0.1 | 0.1 |
| TS (MPa) | 10.1 | 9.6 | 5.7 | 7.5 | 8.4 | 9.8 |
| $\sigma$ (TS) | 0.5 | 0.5 | 0.6 | 0.6 | 0.5 | 0.5 |

(continued)

| | F. 1 | F. 2 | F. 3 | F. 4 | F. 5 | F. 6 |
|---|---|---|---|---|---|---|
| Elong. (%) | 540 | 705 | 650 | 750 | 830 | 820 |
| $\sigma$ (Elong.) | 35 | 45 | 70 | 65 | 55 | 90 |
| TR (N/mm) | 40.7 | 30.8 | 29.9 | 30.7 | 31.5 | 31.3 |
| $\sigma$ (TR) | 1.7 | 0.4 | 0.4 | 0.7 | 0.7 | 0.4 |
| H | 43 | 43 | 46 | 44 | 45 | 44 |
| $\sigma$ (H) | 0.5 | 0.5 | 0.5 | 0.5 | 0.5 | 0.5 |
| $O_2$ TR (mol/[m$^2$s]) | 7.09E-08 | 4.12E-08 | 2.58E-08 | 2.95E-08 | 3.01E-08 | 3.25E-08 |
| $\sigma$ ($O_2$ TR) | 4.05E-09 | 2.64E-09 | 7.04E-10 | 7.32E-10 | 4.55E-10 | 4.22E-10 |
| $O_2$ PR ([mol/$\mu$m]/[m$^2$s]) | 4.08E-05 | 2.43E-05 | 1.72E-05 | 1.62E-05 | 1.68E-05 | 1.76E-05 |
| $\sigma$ ($O_2$ TR) | 3.14E-07 | 1.03E-06 | 2.37E-07 | 2.04E-07 | 2.82E-07 | 2.96E-07 |
| $O_2$ TR (cc/[m$^2$-day]) | 137 | 80 | 50 | 57 | 58 | 63 |
| $\sigma$ ($O_2$ TR) | 8 | 5 | 1 | 1 | 1 | 1 |
| $O_2$ PR ([cc/$\mu$m]/[m$^2$-day]) | 79032 | 46991 | 27527 | 31354 | 32421 | 34130 |
| $\sigma$ ($O_2$ TR) | 608 | 1993 | 457 | 395 | 546 | 618 |
| $\Delta O_2$ PR vs F. 1 (%) | - | -40.5 | -65.2 | -60.3 | -59.0 | -56.8 |

The modulus at 50 % elongation ($M_{50}$), modulus at 100 % elongation ($M_{100}$), modulus at 300 % elongation ($M_{300}$), tensile strength (TS), elongation at break (Elong.), tear resistance (TR) and Shore A hardness (H) were also measured for each of the formulations F. 1 to F. 6 following ageing in air at 120°C for 168 hours. Each property was measured from ten different samples and an average obtained. The results are shown in Table 7 along with corresponding standard deviations (a) below each measurement and, in some cases, the percentage change ($\Delta$) relative to the corresponding measurements prior to ageing.

Table 7.

| | F. 1 | F. 2 | F. 3 | F. 4 | F. 5 | F. 6 |
|---|---|---|---|---|---|---|
| $M_{50}$ (MPa) | 1.3 | 1.8 | 2.0 | 1.2 | 1.8 | 1.7 |
| $\sigma$ ($M_{50}$) | 0 | 0 | 0 | 0.1 | 0.1 | 0 |
| $M_{100}$ (MPa) | 2.6 | 3.0 | 3.3 | 3.1 | 3.1 | 2.9 |
| $\sigma$ ($M_{100}$) | 0.1 | 0 | 0.1 | 0.2 | 0.1 | 0.1 |
| $\Delta$($M_{100}$) | 117% | 100% | 65% | 72% | 72% | 81% |
| $M_{300}$ (MPa) | 8.5 | 5.8 | 5.1 | 5.3 | 5.2 | 5.4 |
| $\sigma$ ($M_{300}$) | 0.1 | 0.1 | 0.1 | 0.2 | 0.1 | 0.1 |
| $\Delta$($M_{300}$) | 57% | 57% | 38% | 47% | 44% | 59% |
| TS (MPa) | 9.9 | 7.9 | 4.7 | 6.8 | 6.1 | 8.3 |
| $\sigma$ (TS) | 0.3 | 0.1 | 0.4 | 0.4 | 0.3 | 0.5 |
| $\Delta$(TS) | -2% | -18% | -18% | -9% | -27% | -15% |
| Elong. (%) | 405 | 510 | 345 | 525 | 500 | 595 |
| $\sigma$ (Elong.) | 20 | 20 | 70 | 25 | 30 | 45 |

(continued)

| | F. 1 | F. 2 | F. 3 | F. 4 | F. 5 | F. 6 |
|---|---|---|---|---|---|---|
| **$\Delta$(Elong.)** | -25% | -28% | -47% | -30% | -40% | -27% |
| **TR (N/mm)** | 28.7 | 29.5 | 28.7 | 29.6 | 30.2 | 33.0 |
| **$\sigma$ (TR)** | 0.3 | 0.7 | 0.6 | 0.6 | 0.5 | 0.6 |
| **$\Delta$(TR)** | -29% | -4% | -4% | -4% | -4% | -4% |
| **H** | 51 | 51 | 50 | 49 | 50 | 52 |
| **$\sigma$ (H)** | 2.5 | 1.5 | 0.5 | 0.5 | 1 | 0.5 |
| **$\Delta$(H)** | 19% | 19% | 9% | 11% | 11% | 18% |

**Claims**

1. An inner liner for a tyre, the inner liner formed from a polymer composition comprising a microcrystalline talc particulate having a BET specific surface area no less than about 35 $m^2$/g and at least one of:

    (a) a $d_{50}$, by Sedigraph, no greater than about 2.0 $\mu$m;
    (b) a $d_{50}$, by laser, no greater than about 5.0 $\mu$m; and
    (c) an aspect ratio from about 50 to about 100.

2. The inner liner according to claim 1, wherein the polymer composition comprises an elastomer such as a synthetic rubber or a natural rubber, for example, a halogenated butyl rubber such as bromobutyl rubber and/or chlorobutyl rubber.

3. The inner liner according to claim 1 or claim 2, wherein the polymer composition comprises no less than about 5 phr, for example, no less than about 10 phr, or no less than about 50 phr, or no less than about 75 phr, of the microcrystalline talc particulate.

4. The inner liner according to any of claims 1 to 3, wherein the polymer composition comprises no more than about 10 phr, for example, no more than about 5 phr, or no more than about 1 phr, in total of reinforcing fillers other than the microcrystalline talc particulate.

5. A tyre comprising the inner liner according to any of claims 1 to 4.

6. A polymer composition comprising a halogenated butyl rubber and a microcrystalline talc particulate having a BET specific surface area no less than about 35 $m^2$/g and one or both of:

    (d) a $d_{50}$, by Sedigraph, no greater than about 2.0 $\mu$m; and
    (e) a $d_{50}$, by laser, no greater than about 5.0 $\mu$m.

7. The polymer composition according to claim 6, wherein the halogenated butyl rubber is bromobutyl rubber and/or chlorobutyl rubber.

8. The polymer composition according to claim 6 or claim 7, wherein the polymer composition comprises no less than about 5 phr, for example, no less than about 10 phr, or no less than about 50 phr, or no less than about 75 phr, of the microcrystalline talc particulate.

9. The polymer composition according to any of claims 6 to 8, wherein the polymer composition comprises no more than about 10 phr, for example, no more than about 5 phr, or no more than about 1 phr, in total of reinforcing fillers other than the microcrystalline talc particulate.

10. A method of making the inner liner for a tyre according to any of claims 1 to 4, the method comprising:

    (a) preparing a polymer composition, wherein preparing the polymer composition comprises combining an elastomer such as a synthetic rubber or a natural rubber, for example, a halogenated butyl rubber such as bromobutyl rubber and/or chlorobutyl rubber, or precursors therefor, with the microcrystalline talc particulate; and
(b) forming the inner liner from the polymer composition.

11. A method of making the polymer composition according to any of claims 6 to 9, the method comprising combining halogenated butyl rubber, or precursors therefor, with the microcrystalline talc particulate.

12. Use, in a polymer composition, of a microcrystalline talc particulate having a BET specific surface area no less than about 35 $m^2$/g and one or both of a $d_{50}$, by Sedigraph, no greater than about 2.0 $\mu$m and a $d_{50}$, by laser, no greater than about 5.0 $\mu$m to reduce the oxygen permeability of the polymer composition as compared to an equivalent polymer composition lacking a talc particulate reinforcing filler, optionally wherein the polymer composition comprises a halogenated butyl rubber such as bromobutyl rubber and/or chlorobutyl rubber.

13. A method of reducing the oxygen permeability of a polymer composition, the method comprising adding a microcrystalline talc particulate having a BET specific surface area no less than about 35 $m^2$/g and one or both of a $d_{50}$, by Sedigraph, no greater than about 2.0 $\mu$m and a $d_{50}$, by laser, no greater than about 5.0 $\mu$m to the polymer composition, optionally wherein the polymer composition comprises a halogenated butyl rubber such as bromobutyl rubber and/or chlorobutyl rubber.

14. The inner liner, tyre, polymer composition, method or use according to any preceding claim, wherein the microcrystalline talc particulate has:

(a) a $d_{50}$, by Sedigraph, no greater than about 1.5 $\mu$m, for example, no greater than about 1.0 $\mu$m, or from about 0.1 $\mu$m to about 2.0 $\mu$m, for example, from about 0.1 $\mu$m to about 1.5 $\mu$m, or from about 0.1 $\mu$m to about 1.0 $\mu$m;
(b) a $d_{50}$, by laser, no greater than about 4.0 $\mu$m, for example, no greater than about 3.0 $\mu$m, or from about 1.0 $\mu$m to about 5.0 $\mu$m, for example, from about 1.0 $\mu$m to about 4.0 $\mu$m, or from about 1.0 $\mu$m to about 3.0 $\mu$m;
(c) a BET specific surface area no less than about 40 $m^2$/g; and/or
(d) an aspect ratio from about 50 to about 90, for example, from about 60 to about 90.

15. The inner liner, tyre, polymer composition, method or use according to any preceding claim, wherein the microcrystalline talc particulate has:

(a) a $d_{95}$, by laser, no greater than about 10.0 $\mu$m, for example, no greater than about 7.0 $\mu$m, or from about 4.0 $\mu$m to about 10.0 $\mu$m, or from about 4.0 $\mu$m to about 7.0 $\mu$m;
(b) a $d_{75}$, by laser, no greater than about 7.0 $\mu$m, for example, no greater than about 5.0 $\mu$m, or from about 2.0 $\mu$m to about 7.0 $\mu$m, or from about 2.0 $\mu$m to about 5.0 $\mu$m;
(c) a $d_{25}$, by laser, no greater than about 3.0 $\mu$m, for example, no greater than about 2.0 $\mu$m, or from about 0.5 $\mu$m to about 3.0 $\mu$m, or from about 0.5 $\mu$m to about 2.0 $\mu$m;
(d) a $d_{95}$, by Sedigraph, no greater than about 5.0 $\mu$m, for example, no greater than about 3.0 $\mu$m, or from about 0.5 $\mu$m to about 5.0 $\mu$m, or from about 0.5 $\mu$m to about 3.0 $\mu$m;
(e) a $d_{75}$, by Sedigraph, no greater than about 3.0 $\mu$m, for example, no greater than about 2.0 $\mu$m, or from about 0.1 $\mu$m to about 3.0 $\mu$m, or from about 0.1 $\mu$m to about 2.0 $\mu$m;
(f) a $d_{25}$, by Sedigraph, no greater than about 1.0 $\mu$m, for example, no greater than about 0.5 $\mu$m, or from about 0.1 $\mu$m to about 1.0 $\mu$m, or from about 0.1 $\mu$m to about 0.5 $\mu$m; and/or
(g) a crystallinity index, CI, no greater than about 7.5 $g/m^2$, for example, from about 0.01 $g/m^2$ to about 7.5 $g/m^2$, or from about 0.01 $g/m^2$ to about 4.0 $g/m^2$.

Europäisches
Patentamt

European
Patent Office

Office européen
des brevets

# EUROPEAN SEARCH REPORT

Application Number

EP 23 30 5894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/097021 A1 (KRUEGER JOERN [DE]) 24 April 2008 (2008-04-24) * claims 1-5; table 1 * | 1-15 | INV. B60C1/00 C08K3/34 |
| X | US 2010/139029 A1 (KIM HONG WON [KR]) 10 June 2010 (2010-06-10) * claims 1-10; example 1 * | 1-15 | |
| A | EP 4 180 481 A1 (IMERTECH SAS [FR]) 17 May 2023 (2023-05-17) * claims 1-14 * | 1-15 | |
| A | EP 4 074 772 A1 (IMERTECH SAS [FR]) 19 October 2022 (2022-10-19) * claims 1-14; example 1 * | 1-15 | |
| A | JP 2015 203103 A (YOKOHAMA RUBBER CO LTD) 16 November 2015 (2015-11-16) * the whole document * | 1-15 | |

TECHNICAL FIELDS SEARCHED (IPC)

C08K
B60C

The present search report has been drawn up for all claims

| Place of search | Date of completion of the search | Examiner |
|---|---|---|
| Munich | 27 October 2023 | Höfler, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 5894

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2023

| Patent document cited in search report | | Publication date | Patent family member(s) | | Publication date |
|---|---|---|---|---|---|
| US 2008097021 | A1 | 24-04-2008 | AT | E434643 T1 | 15-07-2009 |
| | | | DE 102005004031 A1 | | 03-08-2006 |
| | | | EP | 1844096 A1 | 17-10-2007 |
| | | | JP | 5044417 B2 | 10-10-2012 |
| | | | JP | 2008528739 A | 31-07-2008 |
| | | | US | 2008097021 A1 | 24-04-2008 |
| | | | WO | 2006079404 A1 | 03-08-2006 |
| US 2010139029 | A1 | 10-06-2010 | KR | 20100066622 A | 18-06-2010 |
| | | | US | 2010139029 A1 | 10-06-2010 |
| EP 4180481 | A1 | 17-05-2023 | EP | 4180481 A1 | 17-05-2023 |
| | | | WO | 2023083910 A1 | 19-05-2023 |
| EP 4074772 | A1 | 19-10-2022 | EP | 4074772 A1 | 19-10-2022 |
| | | | WO | 2022219138 A1 | 20-10-2022 |
| JP 2015203103 | A | 16-11-2015 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2022060065 W

- WO 2022219138 A1

**Non-patent literature cited in the description**

- **DUMAS et al.** *Angewandte Chemie International Edition,* 2016, vol. 55, 9868-9871

- **WILLI PABST ; CHRISTOPH BERTHOLD.** A Simple Approximate Formula for the Aspect Ratio of Oblate Particles. *Part. Part. Syst. Charact.,* 2007, vol. 24, 458-463